(19) **Europäisches Patentamt European Patent Office Office européen des brevets**

(11) **EP 2 977 201 B1**

(12) **FASCICULE DE BREVET EUROPEEN**

(45) Date de publication et mention
de la délivrance du brevet:
**20.02.2019 Bulletin 2019/08**

(21) Numéro de dépôt: **15382345.5**

(22) Date de dépôt: **29.06.2015**

(51) Int Cl.:
*B32B 15/082* (2006.01)    *B32B 15/09* (2006.01)
*B32B 15/095* (2006.01)    *B32B 15/18* (2006.01)
*B32B 15/20* (2006.01)    *B32B 27/20* (2006.01)
*B32B 27/30* (2006.01)    *B32B 27/36* (2006.01)
*B32B 27/40* (2006.01)

(54) **MULTI-PANNEAU MÉTALLIQUE ET MAGNÉTO-RHÉOLOGIQUE**

MAGNETORHEOLOGISCHES METALL-MULTIPANEEL

MAGNETORHEOLOGICAL METAL MULTI-PANEL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.07.2014 ES 201431113**

(43) Date de publication de la demande:
**27.01.2016 Bulletin 2016/04**

(73) Titulaire: **Recubrimientos Plasticos, S.A.
31190 Astrain (Navarra) (ES)**

(72) Inventeurs:
• **Irazu Echeverria, Leire**
  **31190 Astrain (Navarra) (ES)**
• **Elejabarrieta Olabarri, María Jesús**
  **31190 Astrain (Navarra) (ES)**
• **Tapia de la Fuente, Carlos**
  **31190 Astrain (Navarra) (ES)**
• **Garces Inúñez, Yolanda**
  **31190 Astrain (Navarra) (ES)**
• **Erroba Esquiroz, Jose Mari**
  **31190 Astrain (Navarra) (ES)**
• **Fernandez Resano, Beatriz**
  **31190 Astrain (Navarra) (ES)**
• **Lerga Flamarique, Beatriz**
  **31190 Astrain (Navarra) (ES)**

(74) Mandataire: **Urizar Barandiaran, Miguel Angel
Consultores Urizar y Cia, S.L.
Gordoniz 22 5°
48012 Bilbao (Bizkaia) (ES)**

(56) Documents cités:
EP-A2- 0 500 376    EP-B1- 1 658 971
DE-A1-102009 054 458    GB-A- 902 142
JP-B2- 3 140 209    US-A1- 2009 142 538

## Description

### Objet de l'invention

L'objet de l'invention est un panneau métallique avec une structure sandwich magnéto-rhéologique (SEMR) capable de fournir un grand amortissement acoustique et vibrationnel, dont les applications structurelles sont applicables à des secteurs très divers, tels que les ascenseurs, automobiles, l'aviation, électroménager, construction, etc.

Le contrôle des vibrations structurelles des systèmes mécaniques est un aspect fondamental pour garantir un fonctionnement et une durée corrects. Les vibrations structurelles sont à l'origine de bruit et de pannes associées à la fatigue mécanique à laquelle sont soumis les différents composants du système. Pour contrôler les vibrations non désirées et/ou le bruit, des techniques d'amortissement sont utilisées qui consistent en des configurations d'éléments mécaniques ou de matériaux conçus pour dissiper l'énergie mécanique.

Les matériaux magnéto-rhéologiques sont des matériaux intelligents qui présentent un effet MR sous un champ magnétique. L'effet MR consiste en la modification des propriétés rhéologiques du matériau de manière instantanée et réversible en appliquant un champ magnétique externe. Les matériaux MR se composent de particules magnétiques de talle micrométrique suspendues dans une matrice non magnétisable. Depuis que Rabinow a découvert en 1948 les matériaux MR, ceux-ci ont évolué et se classent aujourd'hui en fluides MR (FMR), gels MR et élastomères MR (EMR). Les matériaux MR les plus communs sont les FMR, mais ils présentent certains inconvénients comparés aux EMR. L'avantage le plus évident est que les EMR ont un effet MR stable, étant donné que les particules magnétique ne sédimentent pas avec le temps. De plus, ils maintiennent leur forme géométrique, même en appliquant des champs bas, ils ne présentent donc pas de problèmes de scellement pour fabriquer des panneaux sandwich. Par conséquent, les EMR sont une bonne option pour fabriquer des panneaux sandwich avec un noyau magnéto-rhéologique.

Les structures sandwich avec un noyau magnéto-rhéologique (SEMR) peuvent contrôler et dissiper les vibrations dans un ample rang de fréquences d'excitation et de température, en modifiant la rigidité et l'amortissement de la structure en réponse à l'intensité du champ magnétique appliqué. Les applications de ces sandwichs adaptables sont multiples, grâce à leurs avantages, tels que la légèreté, rigidité, résistance et surtout capacité de modifier ses propriétés dynamiques selon les besoins requis.

### Antécédents de l'invention

Les panneaux sandwich avec un noyau magnéto-rhéologique et de peaux métalliques, céramiques ou composites sont connus, comme décrit dans DE 10 2009 054458 A1. Autres sandwichs en élastomère magnéto-rhéologique (SEMR) déjà connus se composent de peaux en aluminium pour leur amortissement faible et leur haute rigidité comparés aux EMR. De plus, la perméabilité magnétique relative de l'aluminium est quasi nulle, ce qui ne touche ni la distribution ni l'intensité du champ magnétique.

Le noyau des SEMR se compose principalement d'une matrice polymérique et de particules magnétiques. La matrice utilisée par les différents auteurs pour fabriquer l'EMR est la silicone Selleys Pty.Limited avec le fluide Poly dimethylsiloxane, le caoutchouc en silicone Liyang Silicone Rubber, le polymère inorganique Bentonite Clay et l'huile synthétique et la silicone Elastosil M4644. Quant aux particules magnétiques, la plus utilisée est celle de carbonyl iron (C5FeO5), avec un diamètre supérieur à 3 $\mu$m et dans une proportion de 25-30% en volume de l'EMR.

Pour l'union de la matrice polymérique aux peaux, un adhésif est utilisé.

Dans les sandwichs SEMR connus, la relation de l'épaisseur de la peau avec l'épaisseur du noyau varie entre 1,1% et 20%, c'est-à-dire que le noyau est toujours beaucoup plus épais que les peaux.

Cette configuration comporte de nombreux problèmes.

Les SEMR connus sont des produits très chers.

Ils présentent aussi le problème qu'ils sont excessivement épais, ce qui rend leur application difficile précisément dans les structures pour lesquelles, de par leur valeur ajoutée élevée, comme dans l'aviation ou l'automobile, leur application serait très appréciée.

Dans les structures qui requièrent un pliage du SEMR de plus de 90°, nous avons observé la tendance à se décoller, à cause de l'épaisseur excessive du sandwich.

Le fait qu'un adhésif soit nécessaire pour unir le noyau aux peaux rend l'élaboration des SEMR plus complexe et par conséquent plus chère.

Ces problèmes, ainsi que certains autres, sont résolus par le SEMR objet de l'invention.

### Description de l'invention

Le panneau objet de l'invention résout ces problèmes, car il est constitué d'une structure sandwich qui se caractérise par le fait qu'elle se compose d'un noyau qui, à la fois, dispose d'une résine viscoélastique de nature adhésive, dans laquelle sont distribués uniformément de manière isotrope ou anisotrope avec un proportion en volume supérieure à 5 % ; des particules magnéto-rhéologiques de matériau ferromagnétique avec des tailles comprises entre 10 nm et 10 $\mu$m; ce noyau étant disposé entre une première peau de nature métallique non magnétique et une seconde peau de nature métallique non magnétique égale ou différente de la première peau.

Il se caractérise au par le fait que la relation entre l'épaisseur du noyau par rapport à l'une des épaisseurs de la première ou la seconde peau est inférieure à 0,1 et supérieure à 0,01 :

$$0,01 \leq (H_n/(H_1 \text{ ou } H_2)) \leq 0,1$$

D'autres configurations et avantages de l'invention peuvent être déduits à partir de la description suivante, et des revendications dépendantes.

## Description des dessins

Dans le but de mieux comprendre l'objet de l'invention, une forme préférentielle de réalisation est représentée sur les figures ci-jointes, pouvant présenter des changements accessoires ne dénaturant pas son fondement. Dans ce cas :

La figure 1 est une représentation schématique d'un sandwich magnéto-rhéologique (SEMR) connu.
La figure 2 est une représentation schématique d'une réalisation pratique du sandwich magnéto-rhéologique (SEMR) objet de l'invention.

## Description d'une réalisation préférentielle

Ci-dessous est décrit un exemple de réalisation pratique et non limitatif de la présente invention. D'autres modes de réalisation dans lesquels sont introduits des changements accessoires ne dénaturant pas son fondement ne sont absolument pas écartés.

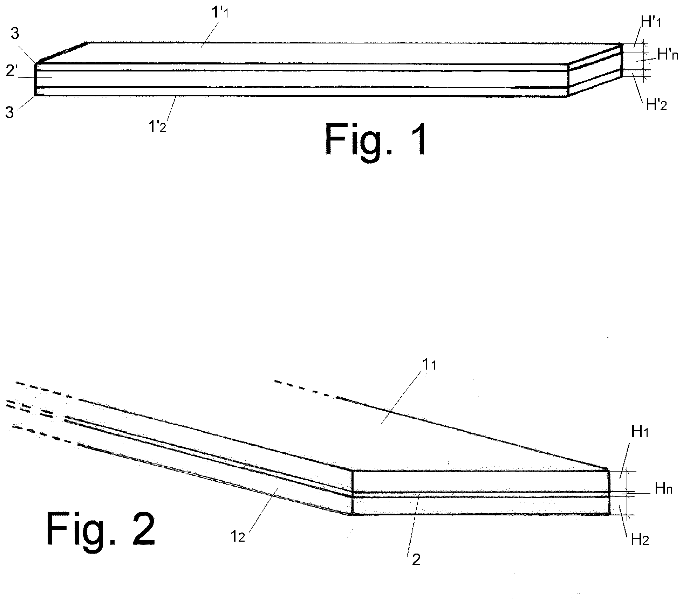

L'on observe sur la figure 1 la constitution d'un SEMR qui se compose d'un noyau (2') de matrice polymérique dans lequel sont distribuées des particules magnétiques de carbonyl iron de taille supérieure à 3 $\mu$m et de forme sphérique.

Il dispose aussi de deux peaux $(1'_1)$, $(1'_2)$ du même matériau métallique, aluminium ou acier non magnétique, c'est-à-dire que les deux sont en aluminium ou les deux sont en acier non magnétique.

Pour unir le noyau (2') aux peaux, $(1_1)$, $(1'_2)$ un adhésif est utilisé (3).

L'épaisseur du noyau (H'4) est largement supérieure à l'épaisseur des peaux $(H'_1)$ $(H'_2)$, certains fabricants font $(H'_1$ ou $H'_2)/H'_n$ entre 1,1 % et 3 %, et d'autres atteignent les 20 %.

L'on observe sur la figure 2 que, dans la constitution du SEMR objet de l'invention, l'adhésif (3) a disparu. Le noyau (2) est une résine viscoélastique, de préférence sensible à la pression (PSA), par exemple en polyester, acrylique, polyuréthane, etc. de manière à ce que ses propriétés visqueuses inhérentes servent à son adhésion directe sur les peaux $(1_1)$, $(1_2)$.

Dans le noyau (2) se trouvent des particules magnéto-rhéologiques distribuées uniformément de manière isotrope ou anisotrope, de matériel ferromagnétique, de préférence en pentacarbonyle de fer (C5FeO5), mais qui pourraient aussi être en nickel, cobalt, etc.

Des particules magnéto-rhéologiques (magnétisables) de différents diamètres (Ø), compris entre 10nm et 10$\mu$m, mais l'on utilise de préférence des particules sphériques de diamètre (Ø) inférieur à 1,3$\mu$m: Ø $\leq$ 1,3$\mu$m, ce qui suppose un diamètre inférieur à la moitié des particules utilisées actuellement dans les panneaux sandwich connus.

La concentration de particules magnéto-rhéologiques par rapport à l'ensemble du noyau (2) peut varier de 5 % à 25 %, mais, de préférence, étant donné les résultats obtenus en laboratoire, la concentration se situe entre 10 % et 20 %, l'effet magnéto-rhéologique inférieur à 5 % étant excessivement faible.

Les peaux $(1_1)$, $(1_2)$ peuvent être du même matériau ou d'un métal différent, mais il doit toujours s'agir de métaux non magnétiques, par exemple, le cuivre, zinc, aluminium, acier non magnétique, tel que l'acier inoxydable non ferritique ou, spécialement, l'acier inoxydable austénitique.

Nous avons conclu en laboratoire que de bons résultats sont obtenus en utilisant une peau en aluminium et une autre en acier, probablement car ces matériaux, qui ont un module d'élasticité différent, sont à l'origine d'un amortissement supérieur des vibrations quand le noyau MR travaille entre deux peaux asymétriques.

La relation entre les épaisseurs des peaux $(H_1)$, $(H_2)$ et l'épaisseur du noyau $(H_n)$ est essentielle dans l'objet de l'invention, étant donné que cela rend possible une application dans les structures des avions ou des automobiles.

En travaillant avec des peaux $(1_1)$, $(1_2)$ d'épaisseurs $(H_1)$, $(H_2)$ semblables aux épaisseurs $(H'_1)$, $(H'_2)$ utilisées dans l'art connu dans l'invention, l'on utilise des épaisseurs de noyau $(H_n)$ très inférieures aux épaisseurs du noyau $(H'_n)$ connu

$$0,05 \leq \frac{Hn}{H'n} \leq 0,5$$

et, en général, la relation entre l'épaisseur des peaux $(H_1)$, $(H_2)$ et celle du noyau $(H_n)$ est déterminée par

$$0,01 \leq (Hn/(H1 \text{ ou } H2)) \leq 0,1$$

Exemples :

| Peau 1 | | Noyau | Peau 2 | |
|---|---|---|---|---|
| Matériau | Épaisseur [mm] | Matériau | Matériau | Épaisseur [mm] |
| AISI 316 | 0,25 | AN601 | AISI 316 | 0,25 |
| AISI 316 | 0,25 | AN601 +12% Fe | AISI 316 | 0,25 |
| AISI 316 | 0,25 | AN601 | Al | 0,5 |
| AISI 316 | 0,25 | AN601 +12% Fe | Al | 0,5 |
| Al | 0,5 | AN601 | Al | 0,5 |
| Al | 0,5 | AN601 +12% Fe | Al | 0,5 |

Les épaisseurs du noyau varient entre 0,02 mm et 0,01 mm, avec une épaisseur de la peau de 0,25 mm ; et entre 0,04 mm et 0,01 mm, avec une épaisseur de la peau de 0,5 mm.

L'union peaux-noyau est effectuée au moyen du processus continu de coil coating (revêtement en bobine), l'adhésif étant appliqué au moyen de rouleaux.

Pour obtenir le facteur de perte de chaque mode, la méthode HPB Half-Power Bandwith est appliquée. Cette méthode consiste en ce que chaque fréquence de résonance $f_n$ est calculée à quelles fréquence tombe le module de transmissibilité 3,01db et l'on détermine $\Delta f_n$. Avec les données expérimentales obtenues de $f_n$ et $\Delta f_n$ de chaque mode, l'on obtient le facteur de perte.

$$\eta = \frac{\Delta fn}{fn}$$

Où:

$f_n$ : fréquence de résonance du mode n (Hz)
$\Delta f_n$ : HPB du mode n (Hz)

Les particules sont en pentacarbonyle de fer (C5FeO5) de tailles différentes, entre 10 nm et 10 $\mu$m.

Le noyau est en résine Koratac AN 601.

AISI 316 est de l'acier inoxydable austénitique.

Al est de l'aluminium.

Dans l'analyse de la première fréquence pour une fréquence appliquée entre 10 et 50 Hz, l'on observe que le facteur de perte de sandwich peut augmenter de 30 % en appliquant un champ magnétique par rapport au même sandwich avec un noyau non MR.

Nous devons souligner dans les résultats que le champ magnétique modifie la rigidité et l'amortissement de tous les sandwichs analysés. La structure perd de la rigidité à basses fréquences et, en général, l'amortissement augmente, spécialement dans le cas du sandwich avec des peaux en aluminium et en acier.

Les matériaux, dimensions, proportions, et, en général, tous les autres détails accessoires ou secondaires ne modifiant, ni ne changeant le fondement proposé pourront être variables.

Les termes dans lesquels est rédigé ce mémoire sont certains et reflètent fidèlement l'objet décrit, et devront être entendus dans leur sens le plus ample, et cela jamais de manière limitative.

**Revendications**

1. Multi-panneau métallique et magnéto-rhéologique, **caractérisé par le fait qu'**il est constitué par une structure sandwich qui dispose de

    a) un noyau (2) qui dispose d'

    $a_1$) une résine viscoélastique (2) de nature adhésive, dans laquelle sont distribuées uniformément de manière isotrope ou anisotrope avec une proportion dans le volume supérieure à 5 %
    $a_2$) des particules magnéto-rhéologiques de matériel ferromagnétique de tailles comprises entre 10nm et $10\mu$m, ce noyau (1) étant disposé entre

    b) une première peau ($1_1$) de nature métallique non magnétique et une seconde peau ($1_2$) de nature métallique non magnétique égale ou différente de la première peau;

    et **par le fait que**

    c) la relation entre l'épaisseur ($H_n$) du noyau par rapport à l'un des épaisseurs ($H_1$), ($H_2$) de la première ($1_1$) et de la seconde peau ($1_2$) est inférieure à 0,1 et supérieure à 0,01: $0,01 \leq (Hn/(H1\ ou\ H2)) \leq 0,1$,
    d) et un champ magnetique est appliqué pour modifier la rigidité et l'amortissement du multi-panneau.

2. Multi-panneau métallique et magnéto-rhéologique, selon la revendication 1, **caractérisé par le fait que** la première et la seconde peau ($1_1$), ($1_2$) sont en aluminium.

3. Multi-panneau métallique et magnéto-rhéologique, selon la revendication 1, **caractérisé par le fait que** la première et la seconde peau ($1_1$), ($1_2$) sont en acier inoxydable non ferritique.

4. Multi-panneau métallique et magnéto-rhéologique, selon la revendication 1, **caractérisé par le fait que** la première peau ($1_1$) est en aluminium et la seconde peau ($1_2$) est en acier inoxydable non ferritique.

5. Multi-panneau métallique et magnéto-rhéologique, selon l'une des revendications 2, 3 ou 4, **caractérisé par le fait que** l'épaisseur ($H_1$) de la première peau ($1_1$) est égale à l'épaisseur ($H_2$) de la seconde peau ($1_2$).

**Patentansprüche**

1. Magnetorheologisches Metall-Multipanel, **gekennzeichnet dadurch, dass** es aus einer Sandwichstruktur besteht, die Folgendes beinhaltet

    a) einen Kern (2), bestehend aus

    $a_1$) einem viskoelastischen Harz (2) mit Hafteigenschaften, auf dem sich gleichmäßig verteilt in isotroper oder anisotroper Form in einem Volumenverhältnis über 5%
    $a_2$) magnetorheologische Partikel aus ferromagnetischem Material und Größen zwischen 10 nm und 10 $\mu$m befinden, wobei der besagte Kern (1) angeordnet ist zwischen

    b) einer ersten Schicht ($1_1$) aus nicht magnetischem Metall und einer zweiten Schicht ($1_2$) aus nicht magnetischem Metall, das gleich oder verschieden ist von dem Metall der ersten Schicht;

    und dadurch, dass

    c) das Stärkenverhältnis ($H_n$) des Kerns im Verhältnis zu einer der Stärken ($H_1$), ($H_2$) der ersten ($1_1$) und zweiten

Schicht ($1_2$) geringer ist als 0,1 und größer als 0,01

$$0,01 \leq \left(\frac{H_n}{H_1\, ou\, H_2}\right) \leq 0,1$$

d) und dass ein Magnetfeld eingerichtet wird, um die Steifigkeit und die Dämpfungseigenschaften des Multipanels zu modifizieren.

2. Magnetorheologisches Metall-Multipanel nach Anspruch 1, **gekennzeichnet dadurch, dass** die erste und die zweite Schicht ($1_1$), ($1_2$) aus Aluminium bestehen.

3. Magnetorheologisches Metall-Multipanel nach Anspruch 1, **gekennzeichnet dadurch, dass** die erste und die zweite Schicht ($1_1$), ($1_2$) aus nicht ferritischem Edelstahl bestehen.

4. Magnetorheologisches Metall-Multipanel nach Anspruch 1, **gekennzeichnet dadurch, dass** die erste Schicht ($1_1$) aus Aluminium und die zweite Schicht ($1_2$) aus nicht ferritischem Edelstahl bestehen.

5. Magnetorheologisches Metall-Multipanel nach einem der Ansprüche 2, 3 oder 4, **gekennzeichnet dadurch, dass** die Stärke ($H_1$) der ersten Schicht ($1_1$) gleich der Stärke ($H_2$) der zweiten Schicht ($1_2$) ist.

**Claims**

1. Magnetorheological metal multi-panel, **characterized in that** it constitutes a sandwich structure that consists of

   a) a core (2) that consists of

   $a_1$) a viscoelastic resin (2) of adhesive nature, in which there are found distributed in a uniform manner isotropically or anisotropically with a proportion in volume greater than 5%
   $a_2$) Magnetorheological particles of ferromagnetic material with sizes ranging from 10nm to $10\mu m$, said core (1) being arranged between

   b) a primary skin ($1_1$) of metallic, non-magnetic nature, and a second skin ($1_2$) of metallic, non-magnetic nature identical to or different from the first skin;

   and **in that**

   c) the ratio of thickness ($H_n$) of the core with respect to any thicknesses ($H_1$), ($H_2$) of the first ($1_1$) and second ($1_2$) skins is lower than 0.1 and higher than a 0.01

$$0,01 \leq \left(\frac{H_n}{H_1\, ou\, H_2}\right) \leq 0,1$$

   d) and a magnetic field is applied to modify the rigidity and the damping of the multi-panel.

2. Magnetorheological metal multi-panel, according to claim 1, **characterized in that** the first and second skin ($1_1$), ($1_2$) are of aluminium.

3. Magnetorheological metal multi-panel, according to claim 1, **characterized in that** the first and second skin ($1_1$), ($1_2$) are of non-ferritic stainless steel.

4. Magnetorheological metal multi-panel, according to claim 1, **characterized in that** the first skin ($1_1$) is of aluminium and the second skin ($1_2$) is of non-ferritic stainless steel.

5. Magnetorheological metal multi-panel, according to one of the claims 2, 3 or 4, **characterized in that** the thickness

(H$_1$) of the first skin (1$_1$) is the same as the thickness (H$_2$) of the second skin (1$_2$).

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102009054458 A1